# DEMANDE DE BREVET EUROPEEN

(11) **EP 0 575 276 A1**
(43) Date de publication de la demande: **22.12.1993**
(21) Numéro de dépôt: 93440049.0
(22) Date de dépôt: 18.06.1993
(51) Int. Cl.: B65B 17/02, B65D 71/00, F16B 4/00

(54) **Procédé pour la solidarisation de conteneurs juxtaposés et/ou superposés**

(30) Priorité: 19.06.1992 FR 9207699
(71) Demandeur: SECS S.A., F-72230 Mulsanne (FR)
(72) Inventeur: Guy, Jacky, F-72500 Chateau-du-Loir (FR)
(74) Mandataire: Michelet, Alain

(57) **Abrégé**

Des conteneurs (13) sont regroupés de manière à constituer une unité de stockage (21) sur au moins une face de laquelle est appliqué un panneau de carton (33, 33') enduit d'un vernis approprié sur celle de ses faces disposée en regard de ladite unité (21), ledit panneau (33, 33') étant solidarisé par thermoscellage à ladite unité de stockage (21) pour constituer un lot (36).

## Description

La présente invention a pour objet un procédé permettant la solidarisation de conteneurs par thermoscellage à l'aide d'au moins un panneau en carton.

On connaît à ce jour des procédés d'emballages groupés de produits utilisant des matières collantes, qui présentent l'inconvénient d'être contraignantes vis à vis de l'écologie.La présente invention a pour but de remédier à cet inconvénient en proposant un procédé faisant appel à la technique du thermoscellage.

Le procédé objet de l'invention consiste à regrouper en un lot des conteneurs qui sont juxtaposés et/ou superposés de manière à constituer une unité de stockage dont la solidarisation est assurée par au moins un panneau de carton qui lui est assemblé par thermoscellage au moyen d'un vernis recouvrant une de ses faces.

Le thermoscellage du panneau de carton sur l'unité de stockage peut être réalisé par tout moyen approprié, notamment à l'aide de têtes thermostatées maintenues à une température convenable suffisante pour assurer la fusion du vernis.

Le vernis servant au thermoscellage du procédé selon l'invention peut être par exemple un vernis cellulosique, ou tout autre vernis approprié.

La description qui va suivre, faite en regard du dessin annexé dans un but explicatif et nullement limitatif, ettra de mieux comprendre les avantages, buts et caractéristiques de l'invention.

Dans le dessin annexé :
- la figure 1 représente une vue en perspective schématique d'un mode de mise en oeuvre du procédé selon l'invention.
- la figure 2a représente une vue en perspective d'un lot de quatre éléments regroupés et maintenus solidaires au moyen d'un panneau en carton comportant deux rabats.
- la figure 2b représente une vue en perspective d'un lot de quatre éléments regroupés et maintenus solidaires au moyen d'un panneau en carton comportant également deux rabats.

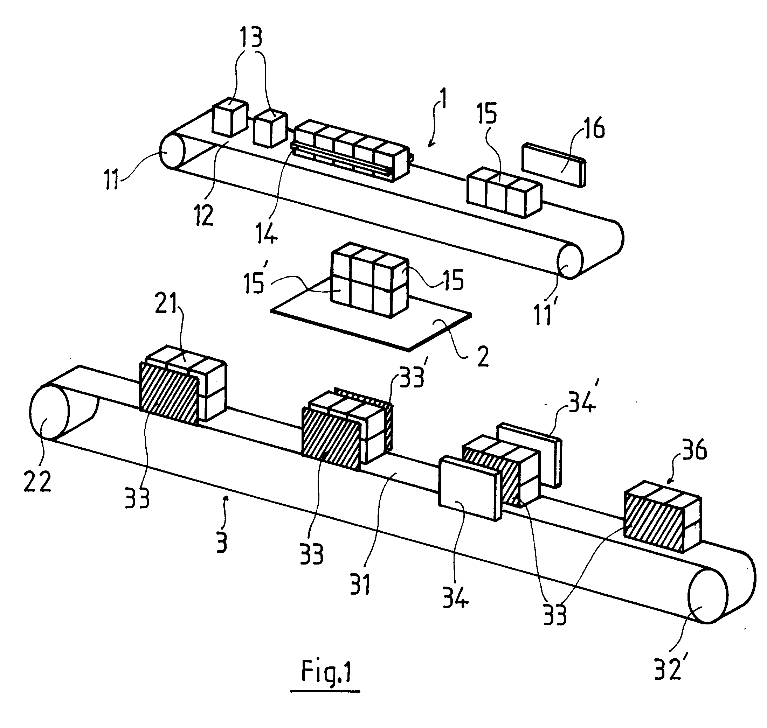

Si on se réfère à la figure 1 on peut voir un premier convoyeur à bande 1 muni de deux cylindres d'entraînement 11 et 11' et une bande transporteuse 12 destinée à recevoir à l'une de ses extrémités des conteneurs 13 qui sont disposés suivant la ou les faces à thermosceller. Des guides 14 permettent de maintenir alignés les conteneurs 13, et un automate, non représenté, programmable selon la quantité de conteneurs 13 que l'on désire grouper, procède à leur comptage de manière à les rassembler pour former un ensemble 15 .

Un système de transfert 16 permet d'une part d'amener cet ensemble 15 sur une table élévatrice 2 ou sur un autre ensemble 15' déjà déposé sur la table 2 de manière à obtenir une unité de stockage 21 composée de plusieurs ensembles 15 superposés, et d'autre part de transférer l'unité de stockage 21 sur un deuxième convoyeur 3 muni de deux rouleaux d'entraînements 32 et 32' et d'un tapis de transport 31 sur lequel est placé un panneau en carton 33 enduit d'un vernis approprié sur celle de ses faces qui est disposée en regard de l' unité de stockage 21, et dont la surface est sensiblement égale aux surfaces latérales de cette dernière.

Le maintien des conteneurs 13 formant l'unité de stockage 21 est réalisé par thermoscellage du panneau en carton 33 sur la surface latérale de l'unité de stockage 21 à l'aide d'une tête thermostatée 34.

Un deuxième panneau en carton 33' placé en regard du panneau 33 peut également être thermoscellé grâce à une deuxième tête thermostatée 34' sur l'autre face de l'unité de stockage 21.

Le lot 36 fini peut être évacué par un troisième convoyeur, non représenté, ou par tout autre moyen approprié.

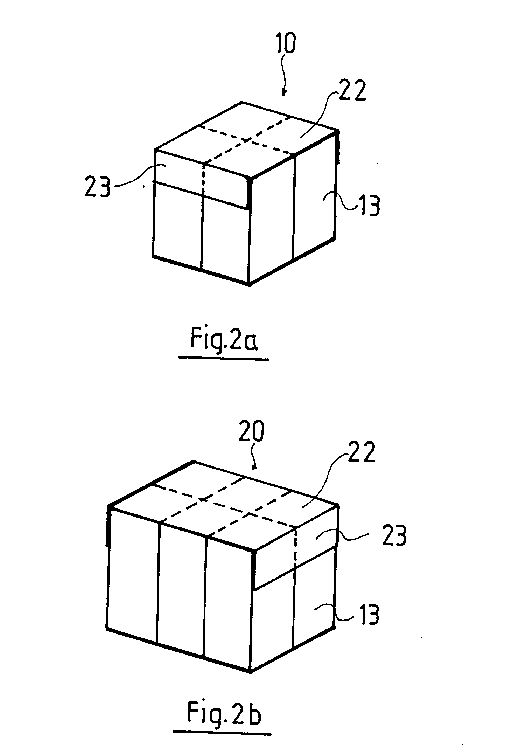

Si on se réfère à la figure 2a on peut voir un lot 10 comprenant quatre éléments 13 solidarisés entre eux grâce à un panneau en carton 22 thermoscellé muni de deux parties repliables 23 à ses extrémités opposés.

Sur la figure 2b on peut voir un ensemble 20 de six éléments 13 regroupés et maintenus au moyen d'un panneau en carton 22 thermoscellé et également muni de deux rabats 23 à ses extrémités.

## Revendications

**1)** Procédé pour la solidarisation de conteneurs juxtaposés et/ou superposés, caractérisé en qu'il consiste à regrouper des conteneurs (13) de manière à constituer une unité de stockage (21) et à appliquer sur au moins une face de ladite unité (21) un panneau de carton (33, 33', 22) enduit d'un vernis approprié sur celle de ses faces disposée en regard de ladite unité (21), ledit panneau (33, 33', 22) étant solidarisé par thermoscellage à ladite unité de stockage (21) pour constituer un lot (36).

**2)** Procédé selon la revendication 1, caractérisé en ce qu'on met en oeuvre deux panneaux en carton (33, 33') que l'on applique sur deux faces opposées de l'unité de stockage (21).
